# EUROPÄISCHE PATENTSCHRIFT

(11) **EP 2 101 977 B1**
(45) Veröffentlichungstag und Bekanntmachung des Hinweises auf die Patenterteilung: **02.03.2011**
(21) Anmeldenummer: 08701482.5
(22) Anmeldetag: 15.01.2008
(51) Int. Cl.: B29C 45/16, B32B 27/34

(54) **MEHRSCHICHTFOLIE UND DARAUS HERGESTELLTES VERBUNDTEIL**
MULTIPLE LAYER FILM AND COMPOSITE MATERIAL PRODUCED THEREFROM
FEUILLE MULTICOUCHES ET ÉLÉMENT COMPOSITE FABRIQUÉ À PARTIR CELA

(30) Priorität: 17.01.2007 DE 102007003327
(43) Veröffentlichungstag der Anmeldung: 23.09.2009
(73) Patentinhaber: Evonik Degussa GmbH, 45128 Essen (DE)
(72) Erfinder: LÜTZELER, Kirsten, 48153 Münster (DE); WURSCHE, Roland, 48249 Dülmen (DE); HÄGER, Harald, 59348 Lüdinghausen (DE); WIELPÜTZ, Martin, 48308 Senden (DE)
(86) Internationale Anmeldenummer: PCT/EP2008/050371
(87) Internationale Veröffentlichungsnummer: WO 2008/087128

(56) Entgegenhaltungen:
- WO-A-2005/123384
- WO-A-2006/066944
- US-A1- 2006 014 035
- US-B1- 6 670 004

## Beschreibung

Die vorliegende Erfindung hat eine Folie zum Gegenstand, die eine Deckschicht aus einem Polyamid sowie einen Haftvermittler enthält, der eine Anbindung an eine hinterspritzte Formmasse auf Basis von PA6 und dergleichen ermöglicht. Gegenstand der Erfindung ist auch die Verwendung dieser Folie zur Herstellung eines Verbundteils, beispielsweise mittels Hinterspritzens, sowie das so hergestellte Verbundteil.

Formmassen aus der Klasse der Polyamide besitzen günstige Eigenschaften zur Herstellung verschiedenster Gebrauchsgegenstände. Insbesondere ist die Kombination dieser Eigenschaften mit dem Merkmal Transparenz von Interesse, wodurch sich die Möglichkeit zur Herstellung transparenter Folien eröffnet, die zur Veredelung oder Dekoration von Oberflächen verwendet werden können. Als Materialien kommen hier vor allem Polyamide mit längerkettigen aliphatischen Monomerkomponenten in Frage, da hier besonders gute Schlagzähigkeit, auch bei tiefen Temperaturen, gute Chemikalienresistenz und eine ausreichend gute Kratzfestigkeit und ausreichender Glanz vorhanden sind. Beispiele sind PA12, PA11, PA1010, PA1012 oder deren Blends. Der Verbund zwischen Substrat und dekorierender Folie kann hierbei durch eine Reihe von Fertigungsverfahren realisiert werden. Die Folie kann beispielsweise mit dem Substrat verpresst werden oder man wählt ein Hinterspritzverfahren, bei dem die Folie bei der Bauteilherstellung in das Spritzgießwerkzeug eingelegt wird. Das Konzept einer Folie als Dekorträger kommt einem Trend zur Individualisierung gestalterischer Elemente am Automobil entgegen. Diese Tendenz führt nämlich in der Fertigung zu einer größeren Palette von Modellen, die aber in der Anzahl der jeweils gefertigten Bauteile pro Serie reduziert ist. Da der Einsatz von Folien schnelle, problemlose Designwechsel erlaubt, kann dieser Herausforderung hiermit begegnet werden. Wichtig ist hierbei, dass durch die Folie die in der Automobilindustrie geforderten Standards hinsichtlich Oberflächeneigenschaften (Class A Oberfläche), Beständigkeit gegenüber Medien und optischem Eindruck erfüllt werden. Auch in der Gestaltung von Innenoberflächen im Automobil sind solche Folien gut einsetzbar.

Derartige Dekorfolien sind im Prinzip bekannt. Die EP 0 949 120 A1 beispielsweise beschreibt Dekorfolien mit einer transparenten Deckschicht aus Polyurethan, Polyacrylat, Fluorpolymer oder Mischungen aus Fluorpolymer und Polyacrylat. Ähnliche Dekorfolien sind auch aus der Aufgrund ihres Eigenschaftsprofils, beispielsweise Schlagzähigkeit und Chemikalienbeständigkeit, sind Polyamide, insbesondere Polyamide auf Basis von PA12 oder PA11, ganz allgemein für die Herstellung derartiger Dekorfolien gut geeignet. Dementsprechend finden sich in der Patentliteratur Beschreibungen von Dekorfolien oder auch Schutzfolien, die eine Deckschicht aus einem Polyamid enthalten. Zu nennen sind hier beispielsweise die Schriften JP60155239A, JP2003118055A, EP 1 302 309 A, EP 0 522 240 A, EP 0 694 377 A, EP 0 734 833 A, WO 9212008 A und EP 0 568 988 A.

Ein von den Materialeigenschaften her geeignetes und auch preiswertes Substrat sind Formmassen auf Basis von PA6, PA66, Copolymeren hiervon, die als PA6/66 bezeichnet werden, sowie teilaromatischen Polyamiden, bei denen ausgehend von PA6, PA66 oder PA6/66 ein Teil der Monomereinheiten durch solche ersetzt ist, die sich z. B. von der Kombination von Terephthalsäure und Hexamethylendiamin herleiten. Derartige teilaromatische Polyamide werden häufig als PPA bezeichnet.

Die EP-A-1 731 569 offenbart Verbundteile aus einer Mehrschichtfolie, deren Deckschicht aus einer Polyamidfornunasse besteht, und einem Substrat aus einer auf Polyamid basierenden Formmasse. PA6 und dergleichen als Substrat ist hier jedoch nicht offenbart, genauso wenig wie ein im Hinblick auf die Haftung optimierter Haftvermittler.

Verbundteile, die eine Polyamiddeckschicht, ein Substrat aus einer ABS-Formmasse und einen hierauf optimierten Haftvermittler enthalten, sind aus der WO 2005/123384 bekannt. Der dort beschriebene Haftvermittler bindet an die Polyamiddeckschicht in erster Linie durch Reaktion der enthaltenen Säureanhydridgruppen mit den Aminoendgruppen des Polyamids an, während er an das ABS-Substrat alleine aufgrund von molekularer Verträglichkeit, also rein physikalisch, anbindet. Verwendet man als Deckschichtmaterial ein Polyamid, das nur eine geringe Konzentration an Aminoendgruppen enthält, wird die Haftung schlechter. Die Verwendung eines Polyamids, das eine höhere Aminoendgruppenkonzentration enthält, als Deckschichtmaterial ist jedoch nachteilig, da Aminoendgruppen zu einem schlechteren Farbverlauf bei thermischer Alterung bzw. allgemein bei oxidativer Schädigung führten; während der Verarbeitung sowie während der Gebrauchsdauer vor allem bei höheren Temperaturen, etwa im Motorraum, tritt folglich eine zunehmende Vergilbung ein, die unerwünscht ist.

Die Aufgabe der vorliegenden Erfindung bestand darin, einen Haftvermittler für die Verbindung zwischen einer Schicht aus einem höheren Polyamid und einem in einem zweiten Arbeitsschritt aufgebrachten Substrat auf Basis von PA6, PA66, PA6/66 oder PPA zur Verfügung zu stellen, der auch dann eine sehr gute Haftung zur Polyamidschicht ergibt, wenn diese nahezu keine Aminoendgruppen enthält. Ein Aspekt der Aufgabe bestand darin, Verbundteile mit fester Schichtenhaftung aus einer solchen Folie und einem in einem gesonderten Arbeitsschritt aufgebrachten Substrat auf Basis der obengenannte Polyamide zur Verfügung zu stellen.

Diese und weitere, aus der Anmeldung ersichtlichen Aufgaben wurden gelöst durch die Verwendung einer Folie, die folgende Schichten enthält:
I. Eine obere Schicht aus einer Formmasse, die zu mindestens 60 Gew.-%, bevorzugt zu mindestens 70 Gew.-%, besonders bevorzugt zu mindestens 80 Gew.-% und insbesondere bevorzugt zu mindestens 90 Gew.-% ein Polyamid enthält, dessen Monomereinheiten im Durchschnitt mindestens 8 C-Atome und bevorzugt mindestens 9 C-Atome enthalten,
II. eine unmittelbar benachbarte Schicht aus einer Formmasse, die folgende Komponenten enthält:
   a) 50 bis 99 Gew.-Teile, bevorzugt 60 bis 98 Gew.-Teile, besonders bevorzugt 70 bis 96 Gew.-Teile, insbesondere bevorzugt 75 bis 95 Gew.-Teile und ganz besonders bevorzugt 80 bis 94 Gew.-Teile einer Polyamidzusammensetzung aus
      α) 40 bis 100 Gew.-%, bevorzugt 50 bis 99,9 Gew.-% und besonders bevorzugt 60 bis 99 Gew.-% PA612 sowie
      β) 0 bis 60 Gew.-%, bevorzugt 0,1 bis 50 Gew.-% und besonders bevorzugt 1 bis 40 Gew.-% Polyamid, das ausgewählt ist aus der Gruppe PA6, PA66, PA6/66, im Folgenden als PPA bezeichneten Copolyamiden, bei denen hiervon ausgehend maximal 50 %, bevorzugt maximal 30 % und besonders bevorzugt maximal 25 % aller Monomereinhsiten durch aromatische Monomereinheiten ersetzt sind, sowie Mischungen hieraus, wobei die Prozentangaben auf die Summe von α) und β) bezogen sind,
   b) 1 bis 50 Gew.-Teile, bevorzugt 2 bis 40 Gew.-Teile, besonders bevorzugt 4 bis 30 Gew.-Teile, insbesondere bevorzugt 5 bis 25 Gew.-Teile und ganz besonders bevorzugt 6 bis 20 Gew.-Teile eines Copolymeren, welches folgende Monomereinheiten enthält:
      - 70 bis 99,9 Gew.-% an Monomereinheiten, die sich von vinylischen Verbindungen herleiten, die ausgewählt sind aus Acrylsäurederivaten, Methacrylsäurederivaten, α-Olefinen und Vinylaromaten
         sowie
      - 0,1 bis 30 Gew.-% an Monomereinheiten, die eine funktionelle Gruppe enthalten, die ausgewählt ist aus einer Carbonsäureanhydridgruppe, einer Epoxidgruppe und einer Oxazolingruppe,
wobei die Summe der Gew.-Teile von II.a) und II.b) 100 ergibt,
zur Herstellung eines Verbundes mit einem Substrat aus einer Formmasse, die mindestens 40 Gew.-%, bevorzugt mindestens 50 Gew.-% und besonders bevorzugt mindestens 60 Gew.-% Polyamid enthält, das ausgewählt ist aus der Gruppe PA6, PA66, PA6/66, PPA sowie Mischungen hieraus.

Die Monomereinheiten des Polyamids der Schicht gemäß I., die sich von Diamin, Dicarbonsäure bzw. Lactam (oder Aminocarbonsäure) herleiten, besitzen im Durchschnitt mindestens 8 C-Atome und bevorzugt mindestens 9 C-Atome. Im Rahmen der Erfindung geeignete Polyamide sind beispielsweise:
- Das Polyamid aus 1,12-Dodecandisäure und 4,4'-Diaminodicyclohexylmethan (PA PACM12), insbesondere ausgehend von einem 4,4'-Diaminodicyclohexylmethan mit einem trans,trans-Isomerenanteil von 35 bis 65 %;
- PA88, PA610, PA612, PA1010, PA1012, PA11, PA12, PA1212 sowie Mischungen hieraus;
- Copolyamide, die sich von PA88, PA610, PA612, PA 1010, PA1012, PA11, PA12 oder PA1212 herleiten, mit maximal 40 Mol-%, bevorzugt maximal 30 Mol-%, besonders bevorzugt maximal 20 Mol-% und insbesondere bevorzugt maximal 15 Mol-% anderer polyamidbildender Monomere,
- Polyamide aus m- und/oder p-Xylylendiamin und einer Dicarbonsäure mit 6 bis 22 C-Atomen und bevorzugt 10 bis 18 C-Atomen sowie Copolyamide hiervon mit maximal 20 Mol-% und insbesondere bevorzugt maximal 15 Mol-% anderer polyamidbildender Monomere sowie
- ein Polyetheramid oder Polyetheresteramid auf Basis eines dieser Polyamide sowie eines Polyethers mit mehr als durchschnittlich 2,3 C-Atomen pro Sauerstoffatom und einer zahlenmittleren Molmasse von 200 bis 5000; der Anteil an Polyamidblöcken beträgt hier 5 bis 98 Gew.-%, bevorzugt 15 bis 90 Gew.-%, besonders bevorzugt 25 bis 80 Gew.-% und insbesondere bevorzugt 35 bis 70 Gew.-%.

Die Schicht gemäß I. kann auch Gemische derartiger Polyamide enthalten; bevorzugt sind Gemische aus einem Homo- oder Copolyamid und einem Polyetheramid oder Polyetheresteramid; hierbei erhält man ein flexibles Schichtenmaterial, was zur Folge hat, dass in vielen Fällen ein Thermoformen der Folie als separater Schritt z. B. vor dem Hinterspritzen nicht notwendig ist, da die Folie durch das Hinterspritzen gleichzeitig auch umgeformt wird.

Die Formmasse der Schicht gemäß I. kann darüber hinaus als weitere Bestandteile andere Polymere enthalten, z. B. isorefraktive Kautschuke, die die Transparenz nicht verschlechtern, sowie Nanopartikel, deren Durchmesser kleiner ist als etwa ¼ der Lichtwellenlänge, Pigmente, Farbstoffe, Metallflitter, Weichmacher, Verarbeitungshilfsmittel, Nukleierungsmittel und Stabilisatoren.

Bei der Schicht gemäß II. wird als Polyamid der Komponente a) α) PA612 ausgewählt.

Beim Polyamid der Komponente a) β) steht PA6/66 für ein Copolyamid aus Caprolactam, Hexamethylendiamin und Adipinsäure. Das Mengenverhältnis zwischen Caprolactam einerseits und Hexamethylendiamin/Adipinsäure andererseits ist im Rahmen der Erfindung unkritisch. Als PPA werden vorzugsweise Copolyamide verwendet, die sich einerseits von Caprolactam und/oder Hexamethylendiamin/Adipinsäure, andererseits von Hexamethylendiamin/Terephthalsäure und/oder Hexamethylendiamin/Isophthalsäure herleiten. Im Extremfall können ausgehend von Hexamethylendiamin/Adipinsäure 50 % der Monomereinheiten, d. h. die gesamte Adipinsäure, durch beispielsweise Terephthalsäure und/oder Isophthalsäure ersetzt sein.

Das Copolymere der Komponente b) enthält bevorzugt folgende Monomereinheiten:
1. Etwa 70 bis etwa 99,9 Gew.-%, bevorzugt 80 bis 99,4 Gew.-% und besonders bevorzugt 85 bis 99 Gew.-% an Monomereinheiten, die ausgewählt sind aus Einheiten folgender Formeln: 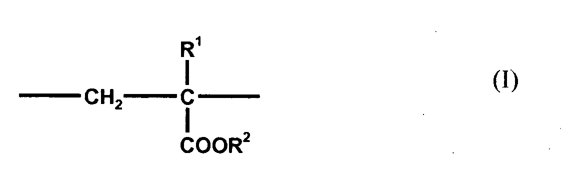 mit R¹ = H oder CH₃ und R² = H, Methyl, Ethyl, Propyl oder Butyl; 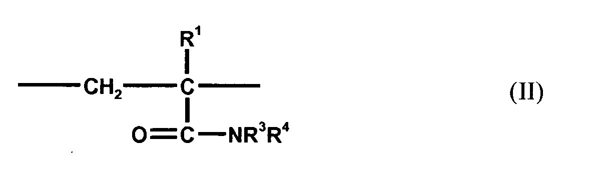 mit R¹ wie oben und R³ und R⁴, unabhängig voneinander, gleich H, Methyl oder Ethyl; 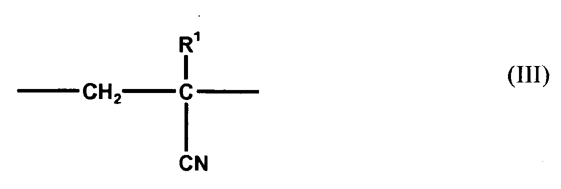 mit R¹ wie oben; 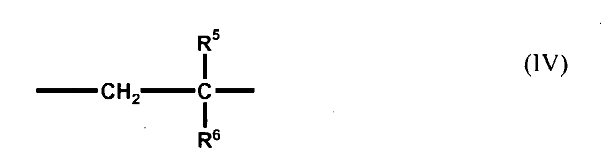 mit R⁵= H oder CH₃ und R⁶ = H oder C₆H₅; 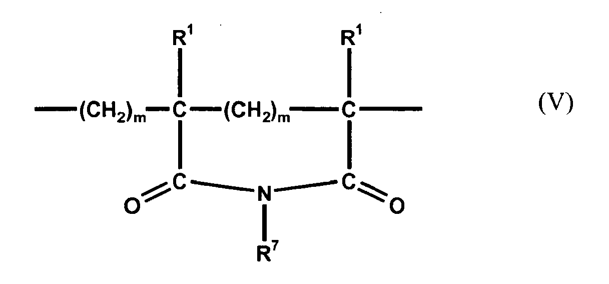 mit R¹ wie oben und R⁷ = H, Methyl, Ethyl, Propyl, Butyl oder Phenyl und m = 0 oder 1;
2. etwa 0,1 bis etwa 30 Gew.-%, bevorzugt 0,6 bis 20 Gew.-% und besonders bevorzugt 1 bis 15 Gew.-% an Monomereinheiten, die ausgewählt sind aus Einheiten folgender Formeln: 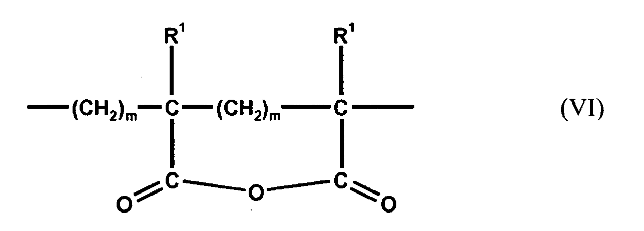 mit R¹ und m wie oben; 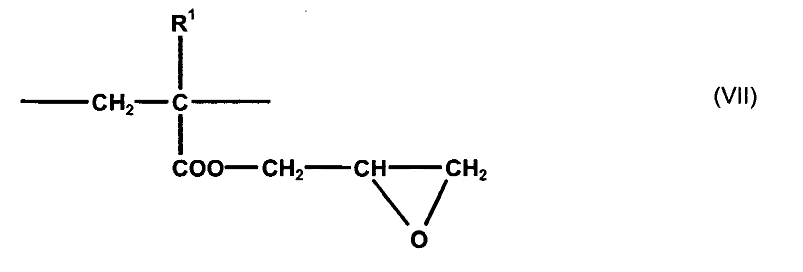 mit R¹ wie oben; 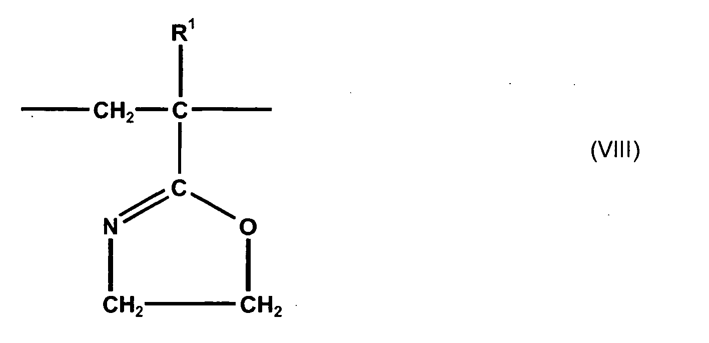 mit R¹ wie oben.

Die Einheiten der Formel (I) leiten sich beispielsweise von Acrylsäure, Methacrylsäure, Methylacrylat, Ethylacrylat, n-Butylacrylat, Methylmethacrylat, n-Propylmethacrylat oder i-Butylmethacrylat her.

Die Einheiten der Formel (II) leiten sich beispielsweise von Acrylamid, Methacrylamid, N-Methylacrylamid, N-Methylmethacrylamid oder N,N-Dimethylacrylamid her.

Die Einheiten der Formel (III) leiten sich von Acrylnitril oder Methacrylnitril her.

Die Einheiten der Formel (IV) leiten sich von Ethen, Propen, Styrol oder α-Methylstyrol her; letztere können ganz oder teilweise durch andere polymerisierbare Aromaten wie p-Methylstyrol oder Inden ersetzt werden, die gleichwirkend sind.

Die Einheiten der Formel (V) leiten sich im Falle m = 0 von gegebenenfalls substituierten Maleinimiden her wie Maleinimid, N-Methylmaleinimid, N-Ethylmaleinimid, N-Phenylmaleinimid oder N-Methylaconitsäureimid. Im Falle m = 1 leiten sie sich durch Umsetzung zweier in einem Polymeren benachbarter Einheiten der Formel (I) mit Ammoniak oder einem primären Amin unter Imidbildung her.

Die Einheiten der Formel (VI) leiten sich im Falle m = 0 von gegebenenfalls substituierten Maleinsäureanhydriden her wie Maleinsäureanhydrid oder Aconitsäureanhydrid. Letztere können ganz oder teilweise durch andere ungesättigte Säureanhydride wie z. B. Itaconsäureanhydrid ersetzt werden, die gleichwirkend sind. Im Falle m = 1 leiten sie sich durch Wasserabspaltung aus zwei in einem Polymeren benachbarten Einheiten der Formel (I) (R² = H) unter Ringschluss her.

Die Einheiten der Formel (VII) leiten sich von Glycidylacrylat oder Glycidylmethacrylat her und die Einheiten der Formel (VIII) von Vinyloxazolin oder Isopropenyloxazolin.

Vom Copolymeren sind verschiedene Ausgestaltungen bevorzugt, die folgende Einheiten enthalten:
A. 14 bis 96 Gew.-%, bevorzugt 20 bis 85 Gew.-% und besonders bevorzugt 25 bis 75 Gew.-% Einheiten der Formel (I), wobei R² nicht H ist;
   0 bis 75 Gew.-%, bevorzugt 1 bis 60 Gew.-% und besonders bevorzugt 5 bis 40 Gew.-% Einheiten der Formel (V) mit m = 1;
   0 bis 15 Gew.-%, bevorzugt 0 bis 10 Gew.-% und besonders bevorzugt 0,1 bis 7 Gew.-% Einheiten der Formel (I) mit R² = H;
   0,1 bis 30 Gew.-%, bevorzugt 1 bis 20 Gew.-% und besonders bevorzugt 2 bis 15 Gew.-% Einheiten der Formel (VI) mit m = 1.
   Bei Anwesenheit von Einheiten der Formel (V) werden derartige Copolymere als Polyacrylimide bzw. Polymethacrylimide oder manchmal auch als Polyglutarimide bezeichnet. Es handelt sich hierbei um Produkte ausgehend von Polyalkylacrylaten bzw. Polyalkylmethacrylaten, bei denen zwei benachbarte Carboxylatgruppen zu einem cyclischen Säureimid umgesetzt worden sind. Die Imidbildung wird vorzugsweise mit Ammoniak bzw. primären Aminen, wie z. B. Methylamin, in Gegenwart von Wasser durchgeführt, wobei die Einheiten der Formel (VI) und ggf. Einheiten der Formel (I) mitR² = H durch Hydrolyse mit entstehen. Die Produkte sowie ihre Herstellung sind bekannt (Hans R. Kricheldorf, Handbook of Polymer Synthesis, Part A, Verlag Marcel Dekker Inc. New York-Basel-Hongkong, S. 223 f., H. G. Elias, Makromoleküle, Hüthig und Wepf Verlag Basel-Heidelberg-New York; US 2 146 209 A; US 4 246 374). Setzt man nur mit Wasser um, so erhält man Einheiten der Formel (VI) sowie ggf. saure Einheiten (I) durch Hydrolyse, ohne dass Imideinheiten (V) gebildet werden.
B. 10 bis 60 Gew.-%, bevorzugt 15 bis 50 Gew.-% und besonders bevorzugt 20 bis 40 Gew.-% Einheiten der Formel (IV);
   39,9 bis 80 Gew.-%, bevorzugt 44,9 bis 75 Gew.-% und besonders bevorzugt 49,9 bis 70 Gew.-% Einheiten der Formel (III);
   0,1 bis 30 Gew.-%, bevorzugt 0,6 bis 20 Gew.-% und besonders bevorzugt 1 bis 15 Gew.-% an Einheiten der Formel (VI) mit m = 0.
   Derartige Copolymere sind auf bekannte Weise durch radikalisch initiierte Copolymerisation von z. B. aliphatisch ungesättigten Aromaten, ungesättigten Carbonsäureanhydriden und Acryl- bzw. Methacrylnitril zugänglich.
C. 39,9 bis 99,9 Gew.-%, bevorzugt 49,9 bis 99,4 Gew.-% und besonders bevorzugt 59,9 bis 99 Gew.-% Einheiten der Formel (I);
   0 bis 60 Gew.-%, bevorzugt 0,1 bis 50 Gew.-% und besonders bevorzugt 2 bis 40 Gew.-% Einheiten der Formel (IV);
   0,1 bis 30 Gew.-%, bevorzugt 0,6 bis 20 Gew.-% und besonders bevorzugt 1 bis 15 Gew.-% an Einheiten der Formel (VI) mit m = 0.
   Derartige Copolymere sind auf bekannte Weise durch radikalisch initiierte Copolymerisation von Acrylsäure, Methacrylsäure und/oder deren Estern, gegebenenfalls aliphatisch ungesättigten Aromaten oder Olefinen sowie ungesättigten Carbonsäureanhydriden zugänglich.
D. 25 bis 99,8 Gew.-%, bevorzugt 40 bis 98,4 Gew.-% und besonders bevorzugt 50 bis 97 Gew.-% Einheiten der Formel (I);
   0,1 bis 45 Gew.-%, bevorzugt 1 bis 40 Gew.-% und besonders bevorzugt 2 bis 35 Gew.-% Einheiten der Formel (III);
   0,1 bis 30 Gew.-%, bevorzugt 0,6 bis 20 Gew.-% und besonders bevorzugt 1 bis 15 Ges.-% Einheiten der Formel (VI) mit m = 0.
   Derartige Copolymere sind auf bekannte Weise durch radikalisch initiierte Copolymerisation von Acrylsäure, Methacrylsäure und/oder deren Estern, Acryl- bzw. Methacrylnitril und ungesättigten Carbonsäureanhydriden zugänglich.
E. Copolymere mit 95 bis 99,9 Gew.-%, bevorzugt 96 bis 99,5 Gew.-% und besonders bevorzugt 97 bis 99,2 Gew.-% Einheiten der Formel (IV) mit R⁶ = H und 0,1 bis 5 Gew.-%, bevorzugt 0,5 bis 4 Gew.-% und besonders bevorzugt 0,8 bis 3 Gew.-% Einheiten der Formel (VI) mit m = 0. Hier handelt es sich um ein mit einem ungesättigten Säureanhydrid wie z. B. Maleinsäureanhydrid funktionalisiertes Polyolefin. Beispiele sind mit Maleinsäureanhydrid gepfropftes Polyethylen oder Polypropylen sowie mit Maleinsäureanhydrid gepfropfter Ethylen-Propylen-Kautschuk oder Ethylen-Propylen-Dien-Kautschuk.
F. 0 bis 99,9 Gew.-%, bevorzugt 0,1 bis 99,4 Gew.-% und besonders bevorzugt 2 bis 99 Gew.-% Einheiten ausgewählt aus den Formeln (I), wobei R² nicht H ist, und (III),
   0 bis 99,9 Gew.-%, bevorzugt 0,1 bis 50 Gew.-% und besonders bevorzugt 2 bis 40 Gew.-% Einheiten der Formel (IV),
   0,1 bis 30 Gew.-%, bevorzugt 0,6 bis 20 Gew.-% und besonders bevorzugt 1 bis 15 Gew.-% Einheiten der Formel (VII).
G. 0 bis 99,9 Gew.-%, bevorzugt 0,1 bis 99,4 Gew.-% und besonders bevorzugt 2 bis 99 Gew.-% Einheiten ausgewählt aus den Formeln (I), wobei R² nicht H ist, und (III),
   0 bis 99,9 Gew.-%; bevorzugt 0,1 bis 50 Gew.-% und besonders bevorzugt 2 bis 40 Gew.-% Einheiten der Formel (IV),
   0,1 bis 30 Gew.-%, bevorzugt 0,6 bis 20 Gew.-% und besonders bevorzugt 1 bis 15 Gew.-% Einheiten der Formel (VIII).

Das Copolymere kann in jedem Fall zusätzlich weitere Monomereinheiten enthalten, beispielsweise solche, die sich von Maleinsäurediestem, Fumarsäurediestern, Itaconsäureestern oder Vinylacetat herleiten, solange die gewünschte haftvermittelnde Wirkung dadurch nicht wesentlich beeinträchtigt wird.

Überraschenderweise hat sich herausgestellt, dass die Anwesenheit des Copolymeren in der Formmasse der Schicht gemäß II. notwendig ist, um bei der anschließenden Verbindung mit dem Substrat eine reproduzierbare, feste Haftung zu erzielen. So hat sich experimentell erwiesen, dass eine Formmasse, die überwiegend aus PA612 und zu einem kleineren Teil aus PA6 besteht, zwar bei der Coextrusion mit einer PA6-Formmasse eine feste Haftung ergibt, dass eine Folie aus der gleichen Formmasse jedoch dann, wenn sie mit einer PA6-Formmasse hinterspritzt wird, nur eine nicht ausreichende Haftung ausbildet. Es wird vermutet, dass der Grund hierfür darin zu suchen ist, dass die Folie beim Hinterspritzen nicht ausreichend anschmilzt. Die Verhältnisse bei der Coextrusion, wo Schmelze auf Schmelze gelegt wird, lassen sich daher nicht auf das Hinterspritzen übertragen. Bei der erzielbaren Haftung spielt auch die Foliendicke eine Rolle: bei sehr dünnen Folien, d. h. Foliendurchmessern von etwa 0,1 mm, die kein Copolymer enthalten, führt die schnelle Abkühlung in der Grenzschicht Folie/Hinterspritzmaterial aufgrund der besseren Temperaturabführung an das Spritzgießwerkzeug zu einer schlechteren Haftung im Vergleich zu gleichartigen dicken Folien. Einschlägiger Stand der Technik für die Coextrusion ähnlicher Formmassen ist die EP-A-1 216 825.

Die Formmasse der Schicht gemäß II. kann die üblichen Hilfs- und Zusatzstoffe wie z. B. Weichmacher, Stabilisatoren, Verarbeitungshilfsmittel, Farbstoffe, Pigmente oder ähnliches enthalten. Die Menge der genannten Mittel ist so zu dosieren, dass die gewünschten Eigenschaften nicht ernsthaft beeinträchtigt werden.

Neben den erfindungsgemäß enthaltenen Schichten gemäß I. und II. kann die Folie, je nach Anwendung, weitere Schichten enthalten, beispielsweise eine Deckschicht oder eine substratseitige Stützschicht aus einer Polyamidformmasse, die mit dem Substrat von der Polymerzusammensetzung her weitgehend übereinstimmt. Der Begriff "weitgehend übereinstimmt" bedeutet hierbei, dass das Polyamid der Stützschicht aus der gleichen Gruppe ausgewählt wird wie das Polyamid des Substrats. So kann beispielsweise dann, wenn das Polyamid des Substrats ein PA66 oder ein PPA ist, das Polyamid der Stützschicht ein PA6 sein. Das gleiche gilt im übrigen auch für das Polyamid der Komponente II. a) β), wenn die Folie keine Stützschicht enthält.

Eine zusätzliche Deckschicht wird vor allem dann eingesetzt, wenn die Schicht gemäß I. eine Farbschicht ist, um eine gewünschte Tiefenwirkung der Einfärbung sicherzustellen, oder wenn eine erhöhte Kratzfestigkeit gewährleistet sein soll. Das Material der Deckschicht ist unkritisch. Vorzugsweise wird es aus der gleichen Gruppe ausgewählt wie das Polyamid der Schicht gemäß I.; es kann aber auch, dem Stand der Technik entsprechend, ein Acrylatpolymer, ein Fluorpolymer, eine Mischung daraus oder ein Klarlack auf Polyurethanbasis sein.

Zusätzlich kann auf die fertige Mehrschichtfolie eine abziehbare Schutzfolie auflaminiert werden, die als Transport- oder Montageschutz wirkt und nach der Herstellung des Verbundteils abgezogen wird.

Die Folie hat in einer bevorzugten Ausführungsform eine Dicke von 0,02 bis 1,2 mm, besonders bevorzugt von 0,05 bis 1 mm, ganz besonders bevorzugt von 0,08 bis 0,8 mm und insbesondere bevorzugt von 0,15 bis 0,6 mm. Die Schicht gemäß II. hat hierbei in einer bevorzugten Ausführungsform eine Dicke von 0,01 bis 0,5 mm, besonders bevorzugt von 0,02 bis 0,4 mm, ganz besonders bevorzugt von 0,04 bis 0,3 mm und insbesondere bevorzugt von 0,05 bis 0,2 mm. Die Folie wird mittels bekannter Methoden hergestellt, beispielsweise durch Coextrusion oder Laminieren. Sie kann anschließend gegebenenfalls umgeformt werden.

In einer bevorzugten Ausführungsform besteht, die Komponente b) aus einem mit Maleinsäureanhydrid gepfropften Polyolefin wie z. B. Ethylen-Propylen-Kautschuk oder Ethylen-Propylen-DienKautschuk. Dies entspricht der oben angegebenen Ausgestaltung E. Die Verwendung derartiger Kautschuke hat den Vorteil, dass beim Compoundieren der Formmasse nicht die Gefahr der Gelbildung besteht. Setzt man stattdessen Copolymere ein, die einen größeren Anteil an Auhydrideinheiten enthalten, ist dafür Sorge zu tragen, dass die zugemischten Polyamide einen ausreichend niedrigen Anteil an Aminoendgruppen besitzen, um eine Gelbildung zu vermeiden. Die Herstellung derartiger aminoendgruppenarmer Polyamide durch Regelung mit zugesetzter Mono- oder Dicarbonsäure bei der Polykondensation ist Stand der Technik; auf diese Weise werden Polyamide erhalten, die einen Überschuss an Carboxylendgruppen gegenüber Aminoendgruppen besitzen.

Um eine Vergilbung der Folie so weit wie möglich zu vermeiden, empfiehlt es sich, als Polyamid der Schicht gemäß I. ein Material zu wählen, das eine möglichst geringe Konzentration an Aminoendgruppen besitzt. Derartige mono- oder dicarbonsäuregeregelte Polyamide sind kommerziell erhältlich. Dies gilt auch dann, wenn sich an die Schicht gemäß I. noch eine zusätzliche Deckschicht anschließt, da einerseits eine thermooxidative Schädigung schon bei der Verarbeitung auftreten kann und andererseits eine Deckschicht nicht ausreichend gegen Diffusion von Sauerstoff sperrt. Auch bei einer zusätzlichen Deckschicht, die Polyamide enthält, empfiehlt es sich, ein Polyamid mit möglichst niedriger Konzentration an Aminoendgruppen einzusetzen. Andererseits gibt es Anwendungen, bei denen die Farbe unkritisch ist, weil z. B. das Verbundteil versteckt eingebaut ist. In diesem Fall kann in der Schicht gemäß I. bzw. in der eventuell vorhandenen zusätzlichen Deckschicht ein Polyamid mit höherer Aminoendgruppenkonzentration eingesetzt werden. Entscheidend ist nur, dass die Erfindung die Möglichkeit eröffnet, bei Bedarf Folien bzw. Verbundteile mit verbessertem Farbverlauf bei oxidativer Schädigung zur Verfügung zu stellen.

Das Polyamid der Schicht gemäß I. sowie, unabhängig hiervon, das Polyamid einer gegebenenfalls vorhandenen Deckschicht kann beispielsweise maximal 50 mmol/kg, maximal 45 mmol/kg, maximal 40 mmol/kg, maximal 35 mmol/kg, maximal 30 mmol/kg, maximal 25 mmol/kg, maximal 20 mmol/kg, maximal 15 mmol/kg, maximal 10 mmol/kg oder maximal 5 mmol/kg an Aminoendgruppen besitzen. Zur Bestimmung der Aminoendgruppen wird 1 g Polyamid in 50 ml m-Kresol bei 25 °C gelöst; die Lösung wird mit Perchlorsäure potentiometrisch titriert.

Für das Polyamid des Substrats gilt das Gleiche wie für das Polyamid der Komponente II. a) β).

Die Formmasse des Substrats kann die üblichen Additive enthalten, wie z. B. Weichmacher, Verarbeitungshilfsmittel, Flammschutzmittel, Stabilisatoren, Antistatika, Schlagzähmodifikatoren, Füllstoffe, Pigmente und Verstärkungsmittel. Darüber hinaus kann die Formmasse weitere Thermoplaste als Bestandteile enthalten, beispielsweise Polyolefine, Polyphenylenether oder ABS.

Die stoffschlüssige Verbindung der Folie mit dem Substrat kann beispielsweise durch Verkleben, Verpressen, Laminieren, Extrudieren, Hinterspritzen, Hinterschäumen oder Hinterpressen hergestellt werden. Vor der Bildung des Verbundes zwischen Folie und Substrat kann die Folie noch bearbeitet oder umgeformt werden, beispielsweise durch Thermoformen oder andere Verfahren. Die Oberfläche kann beispielsweise durch Prägen strukturiert werden. Eine Strukturierung der Oberfläche ist auch vorgelagert im Rahmen der Folienextrusion möglich, beispielsweise durch speziell gestaltete Walzen. Das erhaltene Verbundteil kann anschließend noch umgeformt werden.

Das Substrat kann beliebig dick sein. Im Allgemeinen weist es eine Dicke im Bereich von 0,5 bis 100 mm auf, bevorzugt im Bereich von 0,8 bis 80 mm, besonders bevorzugt im Bereich von 1 bis 60 mm, insbesondere bevorzugt im Bereich von 1,2 bis 40 mm und ganz besonders bevorzugt im Bereich von 1,4 bis 30 mm. Weitere bevorzugte Obergrenzen der Dicke liegen bei 25 mm, 20 mm, 15 mm, 10 mm, 6 mm, 5 mm und 4 mm.

In einer bevorzugten Ausführungsform wird die Folie zur Herstellung eines Bauteils genutzt, das sich im Motorraum von Kraftfahrzeugen, Flugzeugen, Schienenfahrzeugen oder Schiffen befindet, beispielsweise in Form einer Motorabdeckung, Batterieabdeckung oder Batteriegehäuse oder Abdeckung bzw. Gehäuse von Elektronikkomponenten. Darüber hinaus kann die anspruchsgemäße Folie in Form eines Folienverbundes zur Gestaltung bzw. Dekoration von Oberflächen an und in Automobilen und Nutzfahrzeugen verwendet werden, wobei die Folie haftend mit dem Substrat verbunden ist. Das entsprechend gestaltete Bauteil kann flächig ausgeformt sein, wie etwa ein Karosserieteil, beispielsweise Dachmodul, Kotflügel, Motorhaube oder Tür. Daneben kommen auch Ausführungsformen in Frage, in denen längliche, mehr oder weniger gewölbte Bauteile erzeugt werden, etwa Verkleidungen, beispielsweise die Verkleidung sogenannter A-Säulen am Automobil oder Zier- und Blendleisten aller Art, etwa Radioblenden. Ein weiteres Beispiel sind Schutzverkleidungen für Türschwellen. Neben Anwendungen im Außenbereich des Kraftfahrzeuges können auch Bestandteile des Interieurs vorteilhaft durch die erfindungsgemäßen Folien dekoriert werden, insbesondere Zierelemente wie Leisten und Blenden.

Die Folie kann darüber hinaus beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Booten, Flugzeugen, im Haushalt oder an Gebäuden.

Die folgenden Beispiele sollen die Erfindung illustrieren.

Folgende Formmassen für die obere Schicht (Schicht gemäß I) sowie für die Haftvermittlerschicht (Schicht gemäß II) wurden durch Schmelzemischen hergestellt:

| | |
|---|---|
| Formmasse 1: | 70 kg eines Polyetheresteramids, hergestellt aus 849,7 kg Laurinlactam, 27,27 kg Dodecandisäure und 121,04 kg PTHF 1000, |
| | 27 kg PA12 (ηᵣₑₗ = 1,9) |
| | 5,5 kg Farbpulver silber und |
| | 3,0 kg Stabilisatorbatch |
| | |
| Formmasse 2: | 51 kg Polyetheresteramid (wie in Formmasse 1) |
| | 45,0 kg PA 12 (ηᵣₑₗ = 2,1) |
| | 3,0 kg Brilliantsilber-Farbbatch |
| | 1,0 kg Stabilisatoren |
| | |
| Haftvermittler 1: | 87,2 kg PA612 (ηᵣₑₗ = 2,3) |
| | 7,9 kg EXXELOR^{®} 1803 (ein Ethylen-Propylen-Copolymer, gepfopft mit 0,5 - 1 Gew.-% Maleinsäureanhydrid) |
| | 3,0 kg Farbbatch weiß |
| | 1,0 kg Stabilisatoren |
| | |
| Haftvermittler 2: | 65,2 PA612 (ηᵣₑₗ = 1,8) |
| | 22,0 kg PA 6 (ULTRAMID^{®} B3K; BASF AG) |
| | 7,9 kg EXXELOR^{®} VA 1803 |
| | 0,9 kg LOTADER^{®} AX 8900 (Randomcopolymer aus Ethylen, 24 Gew.-% Methylacrylat und 8 Gew.-% Glycidylmethacrylat; Arkema) |
| | 3,0 kg Farbbatch weiß |
| | 1,0 kg Stabilisatoren |
| | |
| Haftvermittler 3: (Vergleich) | wie Haftvermittler 1, aber ohne EXXELOR^{®} VA 1803 |

Die Herstellung der Mehrschichtfolien aus diesen Formmassen erfolgte auf einer Anlage der Firma Collin mit einer Abzugsgeschwindigkeit von 2,0 m/min. Die extrudierten Einzelschichten wurden vereinigt und über einen Kalander gefahren. Die Folien hatten eine Breite von 24 cm; die obere Schicht und die Haftvermittlerschicht hatten eine Dicke von jeweils 200 µm.

In allen untersuchten Fällen hafteten die Schichten fest aufeinander. Eine Schichtentrennung gelang nur bei der Kombination Formmasse 1/Haftvermittler 2; in den übrigen Fällen wurde keine Trennung, sondern kohäsives Versagen der Folienschichten erhalten.

Das Hinterspritzen geschah auf einer Maschine des Typs Engel 650/200 mit einer Werkzeugtemperatur von 90 °C sowie einer Massetemperatur von 300 °C. Die Folie wurde dabei auf ein Format von 100 mm x 150 mm x 0,8-10 mm) eingelegt. Die Dicke der hinterspritzten Platte betrug einschließlich Folie 2,5 mm. Die Ergebnisse sind in der Tabelle 1 dargestellt.

**Tabelle 1: Ergebnisse**

| | Beispiel 1 | Beispiel 2 | Beispiel 3 | Beispiel 4 | Vergleichs-beispiel 1 |
|---|---|---|---|---|---|
| Schicht gemäß I (oben) | Formmasse 1 | Formmasse 2 | Formmasse 2 | Formmasse 2 | Formmasse 2 |
| Schicht gemäß II (unten) | Haftvermittler 1 | Haftvermittler 1 | Haftvermittler 2 | Haftvermittler 2 | Haftvermittler 3 |
| Substrat | PA6^{a)} | PA6^{a)} | PA6^{a)} | PA66^{b)} | PA6^{a)} |
| Haftung zum Substrat | nt^{c)} | nt^{c)} | nt^{c)} | nt^{c)} | kH^{d)} |

| | | | | | |
|---|---|---|---|---|---|
| ^{a}ULTRAMID^{®} B4 (BASF) ^{b)} DURETHAN^{®} AC 30 (Lanxess) ^{c)} nicht trennbar ^{d)} keine Haftung | | | | | |

## Patentansprüche

1. Verwendung einer Folie, die folgende Schichten enthält:
I. Eine obere Schicht aus einer Formmasse, die zu mindestens 60 Gew.-% ein Polyamid enthält, dessen Monomereinheiten im Durchschnitt mindestens 8 C-Atome enthalten, sowie
II. eine unmittelbar benachbarte Schicht aus einer Formmasse, die folgende Komponenten enthält:
a) 50 bis 99 Gew. -Teile einer Polyamidzusammensetzung aus
α) 40 bis 100 Gew.-% PA612 und
β) 0 bis 60 Gew.% Polyamid, das ausgewählt ist aus der Gruppe PA6, PA66, PA6/66, Copolyamiden, bei denen hiervon ausgehend maximal 50 % aller Monomereinheiten durch aromatische Monomereinheiten ersetzt sind, sowie Mischungen hieraus,
wobei die Prozentangaben auf die Summe von α) und β) bezogen sind,
b) 1 bis 50 Gew.-Teite eines Copolymeren, welches folgende Monomereinheiten enthält:
- 70 bis 99,9 Gew.-% an Monomereinheiten, die sich von vinylischen Verbindungen herleiten, die ausgewählt sind aus Acrylsäurederivaten, Methacrylsäurederivaten, α-Olefinen und Vinylaromaten sowie
- 0,1 bis 30 Gew.-% an Monomereinheiten, die eine funktionelle Gruppe enthalten, die ausgewählt ist aus einer Carbonsäureanhydridgruppe, einer Epoxidgruppe und einer Oxazolingruppe,
wobei die Summe der Gew.-Teile von II.a) und II.b) 100 ergibt,
zur Herstellung eines Verbundes mit einem Substrat aus einer Formmasse, die mindestens 40 Gew.-% Polyamid enthält, das ausgewählt ist aus der Gruppe PA6, PA66, PA6/66, Copolyamiden, bei denen hiervon ausgehend maximal 50 % aller Monomereinheiten durch aromatische Monomereinheiten ersetzt sind, sowie Mischungen hieraus.

2. Verwendung einer Folie gemäß Anspruch 1,
**dadurch gekennzeichnet,**
**dass** die Formmasse der Schicht gemäß I. Pigmente, Farbstoffe und/oder Metallflitter enthält.

3. Verwendung einer Folie gemäß einem der Ansprüche 1 und 2,
**dadurch gekennzeichnet,**
**dass** die Folie mindestens eine zusätzliche Schicht enthält, die ausgewählt ist aus einer Deckschicht und einer substratseitigen Stützschicht, wobei letztere aus einer Polyamidformmasse besteht, die mit dem Substrat von der Polymerzusammensetzung her weitgehend übereinstimmt.

4. Verwendung einer Folie gemäß einem der Ansprüche 1 bis 3,
**dadurch gekennzeichnet,**
**dass** das Copolymere der Komponente II. b) ein mit einem ungesättigten Säureanhydrid gepfropftes Polyolefin ist.

5. Verwendung einer Folie gemäß Anspruch 4,
**dadurch gekennzeichnet,**
**dass** das Polyolefin ein Ethylen-Propylen-Kautschuk oder ein Ethylen-Propylen-DienKautschuk ist.

6. Folie, die folgende Schichten enthält:
I. Eine obere Schicht aus einer Formmasse, die zu mindestens 60 Gew.-% ein Polyamid enthält, dessen Monomereinheiten im Durchschnitt mindestens 8 C-Atome enthalten, sowie
II. eine unmittelbar benachbarte Schicht aus einer Formmasse, die folgende Komponenten enthält:
a) 50 bis 99 Gew.-Teile einer Polyamidzusammensetzung aus
α) 40 bis 100 Gew.-% PA612 und
β) 0 bis 60 Gew.-% Polyamid, das ausgewählt ist aus der Gruppe PA6, PA66, PA6/66, Copolyamiden, bei denen hiervon ausgehend maximal 50 % aller Monomereinheiten durch aromatische Monomereinheiten ersetzt sind, sowie Mischungen hieraus,
wobei die Prozentangaben auf die Summe von α) und β) bezogen sind,
b) 1 bis 50 Gew.-Teile eines Copolymeren, welches folgende Monomereinheiten enthält:
- 70 bis 99,9 Gew.-% an Monomereinheiten, die sich von vinylischen Verbindungen herleiten, die ausgewählt sind aus Acrylsäurederivaten, Methacrylsäurederivaten, α-Olefinen und Vinylaromaten sowie
- 0,1 bis 30 Gew.-% an Monomereinheiten, die eine funktionelle Gruppe enthalten, die ausgewählt ist aus einer Carbonsäureanhydridgruppe, einer Epoxidgruppe und einer Oxazolingruppe,
wobei die Summe der Gew.-Teile von II.a) und II.b) 100 ergibt.

7. Folie gemäß Anspruch 6,
**dadurch gekennzeichnet,**
**dass** die Formmasse der Schicht gemäß I. Pigmente, Farbstoffe und/oder Metallflitter enthält.

8. Folie gemäß einem der Ansprüche 6 und 7,
**dadurch gekennzeichnet,**
**dass** die Folie mindestens eine zusätzliche Schicht enthält, die ausgewählt ist aus einer Deckschicht und einer substratseitigen Stützschicht, wobei letztere aus einer Polyamidformmasse besteht, die mit dem Substrat von der Polymerzusammensetzung her weitgehend übereinstimmt.

9. Folie gemäß einem der Ansprüche 6 bis 8,
**dadurch gekennzeichnet,**
**dass** das Copolymere der Komponente II. b) ein mit einem ungesättigten Säureanhydrid gepfropftes Polyolefin ist.

10. Folie gemäß Anspruch 9,
**dadurch gekennzeichnet,**
**dass** das Polyolefm ein Ethylen-Propylen-Kautschuk oder ein Ethylen-Propylen-DienKautschuk ist.

11. Verbundteil aus einer gemäß einem der Ansprüche 1 bis 5 verwendeten Folie bzw. aus einer Folie gemäß einem der Ansprüche 6 bis 10 sowie aus einem in einem gesonderten Arbeitsschritt aufgebrachten Substrat.

12. Verbundteil gemäß Anspruch 11,
**dadurch gekennzeichnet,**
**dass** das Substrat durch Verkleben, Verpressen, Laminieren, Extrudieren, Hinterspritzen, Hinterschäumen oder Hinterpressen aufgebracht wurde.

13. Verbundteil gemäß einem der Ansprüche 11 und 12,
**dadurch gekennzeichnet,**
**dass** es eine Motorabdeckung, eine Batterieabdeckung, ein Batteriegehäuse oder eine Abdeckung oder ein Gehäuse von Elektronikkomponenten ist.

## Claims

1. Use of a foil which comprises the following layers:
I. an upper layer composed of a moulding composition which comprises at least 60% by weight of polyamide, the monomer units of which contain an average of at least 8 carbon atoms,
and also
II. an immediately adjacent layer composed of a moulding composition which comprises the following components:
a) from 50 to 99 parts by weight of a polyamide composition composed of
α) from 40 to 100% by weight of PA612 and
β) from 0 to 60% by weight of polyamide selected from the group of PA6, PA66, PA6/66, and copolyamides in which, starting from these, at most 50% of all of the monomer units have been replaced by aromatic monomer units, or else a mixture of these,
where the percentages are based on the entirety of α) and β),
b) from 1 to 50 parts by weight of a copolymer which contains the following monomer units:
- from 70 to 99.9% by weight of monomer units which derive from vinyl compounds selected from acrylic acid derivatives, methacrylic acid derivatives, α-olefins and vinylaromatics, and also
- from 0.1 to 30% by weight of monomer units which contain a functional group selected from a carboxylic anhydride group, an epoxy group, and an oxazoline group,
where the total of the parts by weight of II.a) and II.b) is 100,
for the production of a composite with a substrate composed of a moulding composition which comprises at least 40% by weight of polyamide selected from the group of PA6, PA66, PA6/66, and copolyamides in which, starting from these, at most 50% of all of the monomer units have been replaced by aromatic monomer units, or else a mixture of these.

2. Use of a foil according to Claim 1,
**characterized in that**
the moulding composition of the layer according to I. comprises pigments, dyes and/or metal flakes.

3. Use of a foil according to either of Claims 1 and 2,
**characterized in that**
the foil comprises at least one additional layer selected from an outer layer and a substrate-side supportive layer, the latter being composed of a polyamide moulding composition whose polymer constitution is substantially the same as that of the substrate.

4. Use of a foil according to any one of Claims 1 to 3,
**characterized in that**
the copolymer of component II.b) is a polyolefin grafted with an unsaturated anhydride.

5. Use of a foil according to Claim 4,
**characterized in that**
the polyolefin is an ethylene-propylene rubber or an ethylene-propylene-diene rubber.

6. Foil which comprises the following layers:
I. an upper layer composed of a moulding composition which comprises at least 60% by weight of polyamide, the monomer units of which contain an average of at least 8 carbon atoms,
and also
II. an immediately adjacent layer composed of a moulding composition which comprises the following components:
a) from 50 to 99 parts by weight of a polyamide composition composed of
α) from 40 to 100% by weight of PA612 and
β) from 0 to 60% by weight of polyamide selected from the group of PA6, PA66, PA6/66, and copolyamides in which, starting from these, at most 50% of all of the monomer units have been replaced by aromatic monomer units, or else a mixture of these,
where the percentages are based on the entirety of α) and β),
b) from 1 to 50 parts by weight of a copolymer which contains the following monomer units:
- from 70 to 99.9% by weight of monomer units which derive from vinyl compounds selected from acrylic acid derivatives, methacrylic acid derivatives, α-olefins and vinylaromatics, and also
- from 0.1 to 30% by weight of monomer units which contain a functional group selected from a carboxylic anhydride group, an epoxy group, and an oxazoline group,
where the total of the parts by weight of II.a) and II.b) is 100.

7. Foil according to Claim 6,
**characterized in that**
the moulding composition of the layer according to I. comprises pigments, dyes and/or metal flakes.

8. Foil according to either of Claims 6 and 7, **characterized in that**
the foil comprises at least one additional layer selected from an outer layer and a substrate-side supportive layer, the latter being composed of a polyamide moulding composition whose polymer constitution is substantially the same as that of the substrate.

9. Foil according to any one of Claims 6 to 8, **characterized in that**
the copolymer of component II.b) is a polyolefin grafted with an unsaturated anhydride.

10. Foil according to Claim 9,
**characterized in that**
the polyolefin is an ethylene-propylene rubber or an ethylene-propylene-diene rubber.

11. Composite part composed of a foil used according to any one of Claims 1 to 5 or of a foil according to any one of Claims 6 to 10, and also of a substrate applied in a separate operation.

12. Composite part according to Claim 11,
**characterized in that**
the substrate has been applied by adhesive bonding, pressing, lamination or extrusion, or by using an injection-moulding method, foaming method, or compression-moulding method for reverse coating.

13. Composite part according to either of Claims 11 and 12,
**characterized in that**
it is an engine cover, a battery cover, a battery casing or a cover or a casing for electronics components.

## Revendications

1. Utilisation d'un film qui contient les couches suivantes :
I. une couche supérieure en un matériau de moulage qui contient au moins 60 % en poids d'un polyamide dont les unités monomères contiennent en moyenne au moins 8 atomes C et
II. une couche directement voisine en un matériau de moulage qui contient les composants suivants :
a) 50 à 99 parties en poids d'une composition de polyamide de
α) 40 à 100 % en poids de PA612 et
β) 0 à 60 % en poids d'un polyamide choisi dans le groupe constitué par PA6, PA66, PA6/66, les copolyamides dont au maximum 50 % de toutes les unités monomères sont remplacées par des unités monomères aromatiques, ainsi que leurs mélanges,
les données de pourcentage se rapportant à la somme d'α) et β),
b) 1 à 50 parties en poids d'un copolymère qui contient les unités monomères suivantes :
- 70 à 99,9 % en poids d'unités monomères qui dérivent de composés vinyliques qui sont choisis parmi les dérivés de l'acide acrylique, les dérivés de l'acide méthacrylique, les α-oléfines et les composés aromatiques de vinyle, et
- 0,1 à 30 % en poids d'unités monomères qui contiennent un groupe fonctionnel choisi parmi un groupe anhydride d'acide carboxylique, un groupe époxyde et un groupe oxazoline,
la somme des parties en poids de II.a) et II.b) étant de 100,
pour la fabrication d'un composite avec un substrat en un matériau de moulage qui contient au moins 40 % en poids d'un polyamide choisi dans le groupe constitué par PA6, PA66, PA6/66, les copolyamides dont au maximum 50 % de toutes les unités monomères sont remplacées par des unités monomères aromatiques, ainsi que leurs mélanges.

2. Utilisation d'un film selon la revendication 1, **caractérisée en ce que** le matériau de moulage de la couche selon I. contient des pigments, des colorants et/ou des paillettes métalliques.

3. Utilisation d'un film selon l'une quelconque des revendications 1 et 2, **caractérisée en ce que** le film contient au moins une couche supplémentaire, qui est choisie parmi une couche supérieure et une couche support du côté du substrat, cette dernière étant constituée d'un matériau de moulage polyamide qui correspond essentiellement au substrat de la composition polymère.

4. Utilisation d'un film selon l'une quelconque des revendications 1 à 3, **caractérisée en ce que** le copolymère du composant II.b) est une polyoléfine greffée avec un anhydride d'acide insaturé.

5. Utilisation d'un film selon la revendication 4, **caractérisée en ce que** la polyoléfine est un caoutchouc éthylène-propylène ou un caoutchouc éthylène-propylène-diène.

6. Film, qui contient les couches suivantes :
I. une couche supérieure en un matériau de moulage qui contient au moins 60 % en poids d'un polyamide dont les unités monomères contiennent en moyenne au moins 8 atomes C et
II. une couche directement voisine en un matériau de moulage qui contient les composants suivants :
a) 50 à 99 parties en poids d'une composition de polyamide de
α) 40 à 100 % en poids de PA612 et
β) 0 à 60 % en poids d'un polyamide choisi dans le groupe constitué par PA6, PA66, PA6/66, les copolyamides dont au maximum 50 % de toutes les unités monomères sont remplacées par des unités monomères aromatiques, ainsi que leurs mélanges,
les données de pourcentage se rapportant à la somme d'α) et β),
b) 1 à 50 parties en poids d'un copolymère qui contient les unités monomères suivantes :
- 70 à 99,9 % en poids d'unités monomères qui dérivent de composés vinyliques qui sont choisis parmi les dérivés de l'acide acrylique, les dérivés de l'acide méthacrylique, les α-oléfines et les composés aromatiques de vinyle, et
- 0,1 à 30 % en poids d'unités monomères qui contiennent un groupe fonctionnel choisi parmi un groupe anhydride d'acide carboxylique, un groupe époxyde et un groupe oxazoline,
la somme des parties en poids de II.a) et II.b) étant de 100.

7. Film selon la revendication 6, **caractérisé en ce que** le matériau de moulage de la couche selon I. contient des pigments, des colorants et/ou des paillettes métalliques.

8. Film selon l'une quelconque des revendications 6 et 7, **caractérisé en ce que** le film contient au moins une couche supplémentaire, qui est choisie parmi une couche supérieure et une couche support du côté du substrat, cette dernière étant constituée d'un matériau de moulage polyamide qui correspond essentiellement au substrat de la composition polymère.

9. Film selon l'une quelconque des revendications 6 à 8, **caractérisé en ce que** le copolymère du composant II.b) est une polyoléfine greffée avec un anhydride d'acide insaturé.

10. Film selon la revendication 9, **caractérisé en ce que** la polyoléfine est un caoutchouc éthylène-propylène ou un caoutchouc éthylène-propylène-diène.

11. Pièce composite à base d'un film utilisé selon l'une quelconque des revendications 1 à 5 ou d'un film selon l'une quelconque des revendications 6 à 10, ainsi que d'un substrat appliqué lors d'une étape de procédé séparée.

12. Pièce composite selon la revendication 11, **caractérisée en ce que** le substrat a été appliqué par collage, compression, laminage, extrusion, rétro-injection, rétro-moussage ou rétro-compression.

13. Pièce composite selon l'une quelconque des revendications 11 et 12, **caractérisée en ce qu'**il s'agit d'un capot de moteur, d'un couvercle de batterie, d'un boîtier de batterie ou d'un couvercle ou d'un boîtier de composants électroniques.
